# FASCICULE DE BREVET EUROPEEN

(11) **EP 3 509 180 B1**
(45) Date de publication et mention de la délivrance du brevet: **21.10.2020**
(21) Numéro de dépôt: 19150369.7
(22) Date de dépôt: 04.01.2019
(51) Int. Cl.: H02J 3/00, H02J 4/00

(54) **PROCÉDÉ DE RÉCONFIGURATION D'UN RÉSEAU D'ALIMENTATION ÉLECTRIQUE ET RÉSEAU ASSOCIÉ**
REKONFIGURIERUNGSVERFAHREN EINES STROMZUFÜHRUNGSNETZES, UND ENTSPRECHENDES NETZ
METHOD FOR RECONFIGURATION OF A POWER SUPPLY NETWORK AND ASSOCIATED NETWORK

(30) Priorité: 05.01.2018 FR 1850090
(43) Date de publication de la demande: 10.07.2019
(73) Titulaire: ALSTOM Transport Technologies, 93400 Saint-Ouen (FR)
(72) Inventeur: AUTHIE, Pierre, 78170 LA CELLE SAINT CLOUD (FR); DESHAYES, Laurent, 95580 MARGENCY (FR); CHOMEZ, Fabian, 34920 LE CRES (FR)
(74) Mandataire: Lavoix

(56) Documents cités:
- FR-A1- 3 076 670
- US-A1- 2009 295 231
- US-A1- 2012 203 479

## Description

L'invention a pour domaine celui des procédés de reconfiguration d'un réseau d'alimentation électrique après la survenue d'une défaillance.

Dans le présent document, un réseau d'alimentation électrique est de préférence un réseau triphasé, de préférence encore un réseau de moyenne tension, typiquement entre 1 kV et 50 kV, plus particulièrement entre 11 kV et 33 kV.

De manière générale, un réseau d'alimentation électrique est constitué de nœuds et de mailles, une maille connectant électriquement deux nœuds.

On considère ici une application dans laquelle un client de l'opérateur du réseau d'alimentation électrique alimente en puissance électrique des équipements connectés aux nœuds d'un réseau, qui est alimenté par deux sources aux fins de redondance.

Un nœud est par exemple un jeu de barres interne à un tableau de moyenne tension, aussi dénommée «busbar » en anglais.

Les mailles sont par exemple des câbles d'alimentation. Un câble présente généralement une longueur importante, par exemple de l'ordre du kilomètre ou plus.

Les documents US 2009/295231 et US2012203479 divulguent respectivement un réseau d'alimentation électrique comportant : une ligne électrique connectée entre des première et seconde sources propres à appliquer à la ligne un niveau de tension haut, la ligne comportant une pluralité de mailles connectées les unes à la suite des autres par une pluralité de barres formant des nœuds du réseau, chacune des deux extrémités d'une maille étant connectée électriquement à une barre par l'intermédiaire d'un disjoncteur propre à être dans une position ouverte ou une position fermée, une barre qui n'est pas dans un niveau de tension haut étant dans un niveau de tension flottant, dit niveau de tension « bas » ; et un système de détection de défaillance, comportant, associée à chaque maille, une paire de relais en communication l'un avec l'autre, un relais étant propre à piloter un disjoncteur local situé à une extrémité de la maille considérée lorsqu'une défaillance est détectée à partir du résultat d'une mesure différentielle des courants circulant au niveau des extrémités de la maille considérée.

Le type de défaillance évoqué dans le présent document est une défaillance affectant une maille, par exemple une discontinuité du câble constitutif de la maille, une dégradation de son isolement électrique, la formation d'un arc électrique avec un conducteur voisin, etc.

De manière générale, la détection d'une défaillance s'accompagne de l'isolement de la maille défaillante et de la reconfiguration du réseau pour que les différents nœuds restent alimentés.

Ceci est illustré par les figures générales 1 à 3.

Sur ces figures, le réseau 1 comporte quatre mailles 10, 20, 30 et 40 et cinq barres 101, 112, 123, 134 et 102, ainsi que deux sources d'alimentation, S1 et S2, situées à chaque extrémité du réseau. Les mailles sont connectées en série les unes aux autres par l'intermédiaire des barres. Dans cet exemple, le réseau forme donc une ligne, aussi appelée artère électrique à alimentation bilatérale. Si les deux sources sont géographiquement proches l'une de l'autre, la ligne forme une boucle.

La connexion entre l'extrémité d'une maille et une barre s'effectue au travers d'un disjoncteur, qui est un interrupteur commandé, pouvant être soit en position « ouvert », symbolisée par un trait sur les figures, soit dans la position « fermé », symbolisée par une croix sur les figures. Ainsi, la première maille 10 est connectée via un premier disjoncteur 11 à la barre 101 et par un second disjoncteur 12 à la barre 112. La seconde maille 20 est connectée via un premier disjoncteur 21 à la barre 112 et par un second disjoncteur 22 à la barre 123. La troisième maille 30 est connectée via un premier disjoncteur 31 à la barre 123 et par un second disjoncteur 32 à la barre 134. Enfin, la quatrième maille 40 est connectée via un premier disjoncteur 41 à la barre 134 et par un second disjoncteur 42 à la barre 102.

La première barre 101 est connectée à une borne de la première source S1 de puissance électrique, l'autre borne de la première source étant connectée à un potentiel de référence du réseau (non représentée sur les figures).

La cinquième barre 102 est connectée à une borne de la seconde source S2 de puissance électrique, l'autre borne de la première source étant connectée à un potentiel de référence du réseau (non représentée sur les figures).

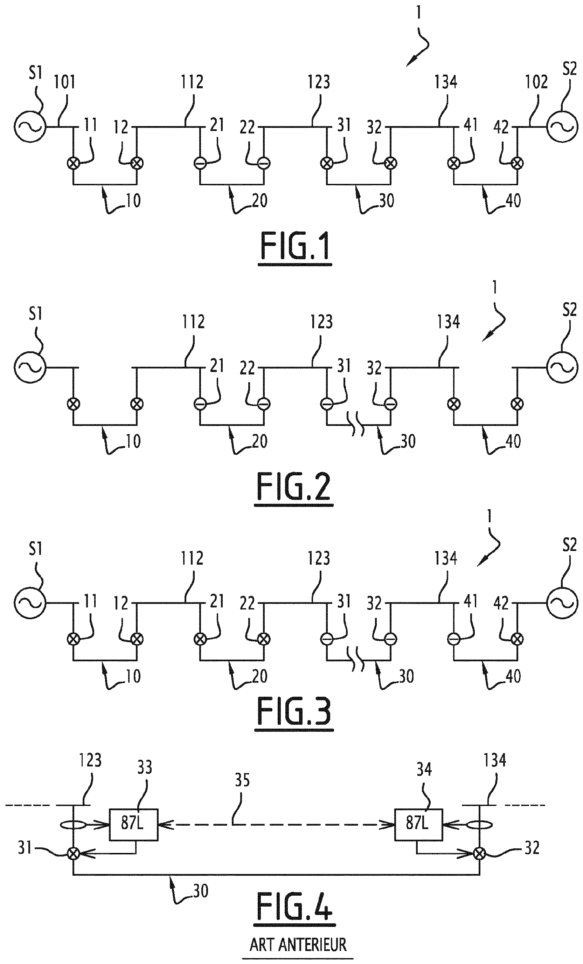

Pour éviter de mettre en parallèle les deux sources, les disjoncteurs d'une maille intermédiaire de sectionnement sont ouverts. Sur la figure 1, les disjoncteurs 21 et 22 sont ouverts, la maille 20 étant choisie comme maille de sectionnement. De ce fait, le réseau est subdivisé en un premier segment qui est alimenté par la première source S1, et un second segment qui est alimenté par la seconde source S2. Toutes les barres sont alimentées, soit par la première source, soit par la seconde source. La maille de sectionnement, qui n'est pas alimentée, est à un potentiel indéfini. Le choix de la maille de sectionnement résulte d'une optimisation du réseau en fonction des équipements connectés et de leurs besoins en puissance électrique.

Comme représenté sur la figure 2, en cas de détection d'une défaillance d'un câble constitutif d'une maille, par exemple la maille 30, les disjoncteurs situés à chacune des extrémités de la maille défaillante, en l'occurrence les disjoncteurs 31 et 32, sont ouverts pour isoler la maille défaillante du reste du réseau.

L'isolement de la maille défaillante conduit à ce qu'un segment intermédiaire du réseau, comportant au moins une barre, situé entre la maille défaillante et la maille de sectionnement, ne soit plus alimenté. Dans le cas illustré par la figure 2, le segment intermédiaire isolé est constitué de l'unique barre 123 située entre la maille de sectionnement 20 et la maille défaillante 30.

Les équipements raccordés à la ou à chaque barre du segment intermédiaire ne sont donc plus alimentés. Il convient de reconfigurer rapidement le réseau 1 pour que ces équipements soient à nouveau alimentés, sans attendre la remise en service de la maille défaillante.

Pour reconfigurer le réseau, comme cela est représenté sur la figure 3, les disjoncteurs de la maille de sectionnement sont fermés, de manière à intégrer le segment intermédiaire préalablement isolé, au premier ou au second segment du réseau. Ainsi, les disjoncteurs 21 et 22 sont fermés permettant de raccorder la barre 123 à la première source S1.

La maille défaillante 30 reste isolée le temps qu'une équipe de maintenance effectue les travaux nécessaires à sa remise en service.

Selon l'état de la technique, représenté sur la figure 4, la détection d'une défaillance sur une maille et le pilotage des disjoncteurs de cette maille pour l'isoler du reste du réseau, met en œuvre une paire de relais réalisant une protection de type différentiel de cette maille, (code 87L selon la norme ANSI/IEEE C37.2).

Plus précisément, à chaque extrémité d'une maille, par exemple la maille 30, est associé un relais 33, 34, de pilotage du disjoncteur 31, 32, correspondant.

Ces deux relais sont en communication l'un avec l'autre au moyen d'une liaison dédiée 35, par exemple une fibre optique de liaison des deux relais entre eux.

Le qualificatif de « local » est relatif aux composants associés au relais considéré d'une paire de relais, alors que le qualificatif de « distant » est relatif aux composants associés à l'autre relais de la paire de relais, du point de vue du relais considéré.

Chaque relais d'une paire de relais est connecté à un capteur de courant de manière à effectuer une mesure différentielle des courants circulant aux extrémités de la maille que cette paire de relais équipe. Sur la figure 4, ce capteur de courant est symbolisé par une boucle entourant l'extrémité du câble de la maille 30. Chaque relais d'une paire de relais est propre à transmettre périodiquement une mesure de courant vers l'autre relais. Chaque relais d'une paire de relais est propre à élaborer une variable de détection de défaillance à partir de sa mesure de courant et de la mesure de courant qu'il reçoit de l'autre relais. Cette variable prend la valeur « 0 » lorsque aucune défaillance n'est détectée et la valeur « 1 » dès qu'une défaillance est détectée. Les deux relais de la paire élaborent quasi simultanément cette variable de détection.

En cas de détection d'une défaillance par un relais, celui-ci commande l'ouverture du disjoncteur local. L'autre relais réagit quasi simultanément, puisqu'il utilise les mêmes mesures de courant, et commande l'ouverture du disjoncteur distant. Par ce mécanisme, une maille est isolée rapidement, en quelques centaines de millisecondes après la survenue d'une défaillance.

Une fois le maille défaillante isolée, pour la reconfiguration du réseau proprement dite, il est connu de munir le réseau d'un système de reconfiguration spécifique.

Celui-ci comporte un système central de reconfiguration connecté, par un réseau de communication dédié, à une pluralité d'unités de contrôle, chaque unité de contrôle étant associée à un disjoncteur du réseau.

Une unité de contrôle est connectée à un relais de détection de défaillance de la maille et acquiert la valeur courante de la variable de détection de défaillance du relais, ainsi que la valeur courante de la position du disjoncteur local piloté par le relais.

Les valeurs de ces variables sont transmises au central de reconfiguration, qui maintient à jour une cartographie de la configuration du réseau.

Lors de la détection d'une défaillance et l'isolement d'une maille, pour la reconfiguration du réseau, le central sélectionne une cartographie dégradée en fonction de la maille isolée. A partir de cette cartographie dégradée, des signaux adaptés de pilotage des disjoncteurs, relayés par les unités de contrôle, sont communiqués aux relais pour piloter les disjoncteurs de manière à configurer le réseau conformément à la cartographie dégradée.

Un tel système de reconfiguration est coûteux car il nécessite des équipements supplémentaires, ainsi que le déploiement d'un réseau de communication dédié entre les unités de contrôle et le central de reconfiguration. Il nécessite également la connexion en sécurité des unités de contrôle aux relais correspondant.

L'invention a donc pour but de résoudre ce problème, en proposant un réseau muni d'une fonctionnalité de reconfiguration, qui soit facile à déployer et à maintenir.

Pour cela, l'invention a pour objet un procédé de reconfiguration d'un réseau d'alimentation électrique, et un réseau d'alimentation électrique selon les revendications annexées.

L'invention et ses avantages seront mieux compris à la lecture de la description détaillée qui va suivre d'un mode de réalisation particulier donnée uniquement à titre d'exemple non limitatif, cette description étant faite en se référant aux dessins annexés sur lesquels :
- les figures 1 à 3 représentent de manière générale les étapes de détection d'une maille défaillante, d'isolement de cette maille et de reconfiguration d'un réseau ;
- la figure 4 est une représentation schématique d'un système de détection de défaillance connu équipant une maille du réseau, comportant une paire de relais ;
- la figure 5 est une représentation schématique du réseau selon l'invention, le système de détection étant programmé pour réaliser la reconfiguration du réseau ;
- la figure 6 est un schéma logique représentant la manière dont un relais du réseau de la figure 5 est programmé ; et,
- les figures 7 à 13 représentent différentes étapes de la détection de défaillance d'une maille, de l'isolement de la maille défaillante, de la reconfiguration du réseau vers un mode de fonctionnement dégradé et de la reconfiguration du réseau vers le mode de fonctionnement optimal initial.

Le présent procédé de reconfiguration met à profit la capacité de programmation des relais actuellement disponibles sur le marché, pour qu'ils réalisent, en plus de la détection d'une défaillance et l'isolement de la maille défaillante, la reconfiguration du réseau de manière automatique, suite de la détection d'une défaillance.

Par exemple, le relais MiCOM P541 d'ALSTOM présente une telle capacité de programmation.

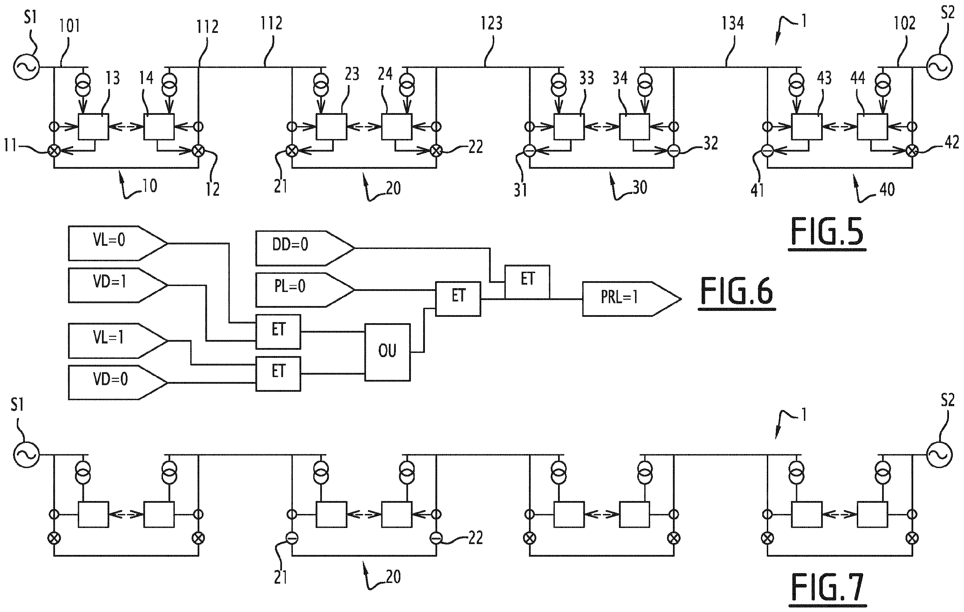

Le réseau 1 de la figure 1 est repris sur la figure 5.

Chaque maille du réseau est équipée d'une paire de relais, conformément à la figure 4.

Un relais est connecté à au moins un capteur de courant symbolisé, sur la figure 5, par une boucle entourant le câble de la maille correspondante.

Un relais est propre à mesurer le courant circulant dans l'extrémité locale de la maille et à recevoir une mesure du courant circulant dans l'extrémité distante de la maille, réalisée par le relais distant et transmis via un liaison de communication entre le deux relais d'une paire.

Un relais est propre à effectuer une mesure différentielle du courant circulant aux extrémités de la maille qu'il équipe et à mettre à jour périodiquement la valeur d'une variable de détection de défaillance DD à partir des conditions que doivent vérifier les courants mesurés. Cette variable prend la valeur « 0 » lorsque aucune défaillance n'est détectée et la valeur « 1 » dès qu'une défaillance est détectée. Lorsque la variable DD a la valeur « 1 », elle ne peut reprendre la valeur « 0 » qu'à la suite d'une réinitialisation du relais, par exemple déclenchée manuellement par une personne lors de la remise en service de la maille défaillante.

Un relais est propre à effectuer une mesure de la position courante dans laquelle se trouve le disjoncteur local qu'il pilote. Un relais est propre à mettre à jour périodiquement la valeur d'une variable de position du disjoncteur local PL. Cette variable prend la valeur « 0 » lorsque le disjoncteur local est ouvert et la valeur « 1 » lorsque le disjoncteur local est fermé.

Un relais est également connecté à un capteur de tension permettant de réaliser une mesure de la tension sur la barre locale, c'est-à-dire la barre à laquelle est relié le disjoncteur local. Sur la figure 5, le capteur de tension est symbolisé par un transformateur d'isolement entre une barre et un relais. Un relais est ainsi propre à mettre à jour périodiquement la valeur d'une variable de niveau de tension sur la barre locale VL, prenant la valeur « 0 » lorsque la barre n'est pas alimentée, et la valeur « 1 » lorsque la barre est alimentée, c'est-à-dire portée à la tension de la première source S1 ou de la seconde source S2.

Un relais est propre à mettre à jour la valeur d'une variable de position requise du disjoncteur local, PRL. Cette variable prend la valeur « 0 » lorsque le disjoncteur local doit être en position « ouvert » et la valeur « 1 » lorsque le disjoncteur local doit être dans la position « fermé ».

Un relais comporte une sortie d'actionnement reliée au disjoncteur local qu'il pilote. Le relais est propre à émettre un signal d'actionnement du disjoncteur local.

Un signal d'actionnement en ouverture est émis dès que la position requise du disjoncteur local vaut « 0 » alors que sa position courante vaut « 1 ».

Un signal d'actionnement en fermeture est émis lorsque la position requise du disjoncteur local vaut « 1 » alors que sa position courante vaut « 0 ». Cependant, le signal d'actionnement en fermeture n'est émis qu'à l'issue d'une temporisation qui est déclenchée lors d'une ouverture du disjoncteur. Ainsi, un disjoncteur ne peut être refermé immédiatement après avoir été ouvert. Il ne peut être refermé qu'après une durée supérieure à la temporisation. La temporisation est un paramètre prédéterminé mais ajustable à l'installation.

Un relais comporte un port de communication bidirectionnel avec l'autre relais de la paire de relais associée à la maille considérée.

Un relais émet périodiquement, en utilisant ce port de communication, un message indiquant les valeurs courantes de la mesure locale du courant, de la variable de position du disjoncteur local PL, et de la variable de niveau de tension sur la barre locale VL.

Un relais tient à jour des variables de position du disjoncteur distant PD, et de niveau de tension sur la barre distante VD. Les valeurs de ces variables sont mises à jour avec les valeurs contenues dans un message reçu de l'autre relais.

Pour la reconfiguration du réseau, la logique de chaque relais du réseau 1 est programmée selon le schéma logique de la figure 6. Ce schéma représente la contrainte vérifiée à chaque instant par un relais : si les valeurs de la variable de niveau de tension sur la barre locale, VL, et de la variable de niveau de tension sur la barre distante, VD, sont opposées ; et si la valeur de la position du disjoncteur local, PL, est « 0 » (le disjoncteur local étant dans la position ouverte) ; et si la valeur de la variable de détection de défaillance, DD, est « 0 » (c'est-à-dire qu'il n'y a pas de défaillance sur la maille associée au relais considéré), alors la valeur de la variable de position requise du disjoncteur local, PRL, passe à « 1 ».

Cette logique et le procédé de reconfiguration correspondant sont illustrés pour le cas de la survenue d'une défaillance sur la maille 30 conformément aux figures 7 et suivantes.

A la figure 7, le réseau 1 est dans la configuration optimale : la maille 20 est la maille de sectionnement, qui sépare le réseau en deux segments complémentaires, un premier segment alimenté par la première source S1 et un second segment alimenté par la seconde source S2. Les disjoncteurs 21 et 22 sont ouverts alors que les autres disjoncteurs du réseau 1 sont fermés.

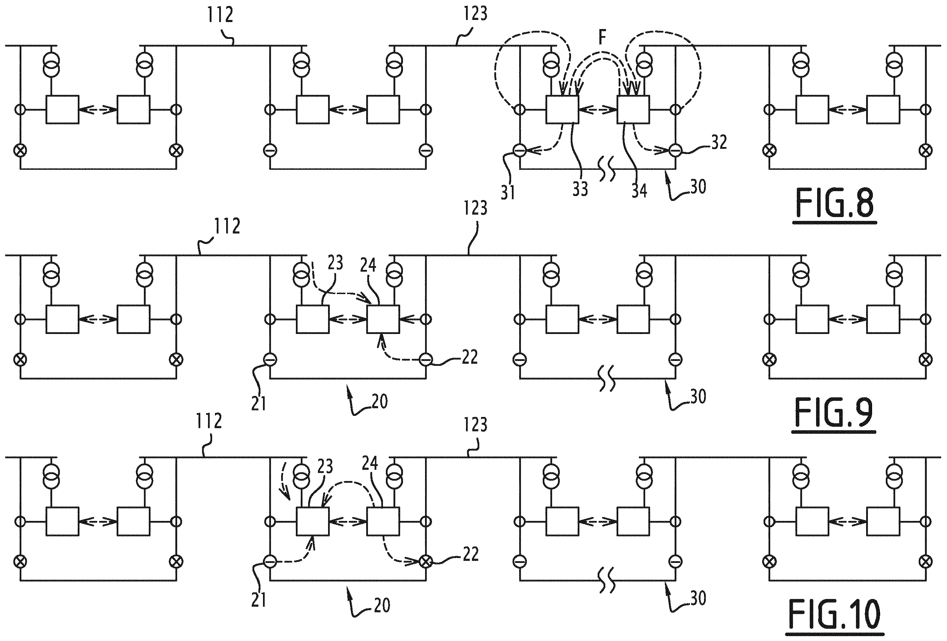

A la figure 8, les mesures de courant aux extrémités de la maille 30 par les relais 33 et 34 conduisent au basculement de la valeur de leurs variables respectives de détection de défaillance, DD, de la valeur « 0 » à la valeur « 1 ». Ceci entraine immédiatement l'émission d'un signal d'actionnement en ouverture des disjoncteurs 31 et 32.

Détectant la position du disjoncteur local 31, le relais 33 modifie la valeur de la variable de position du disjoncteur local, PL, pour la passer de la valeur « 1 » à la valeur « 0 », ce qui entraine l'actionnement en ouverture du disjoncteur 31. De manière similaire, détectant la position du disjoncteur local 32, le relais 34 modifie la valeur de la variable de position du disjoncteur local, PL, pour la passer de la valeur « 1 » à la valeur « 0 », ce qui entraine l'actionnement en ouverture du disjoncteur 32.

La maille 30 est par conséquent isolée des première et seconde sources S1 et S2.

Ce faisant, la barre 123 n'est plus alimentée car elle a été déconnectée de la seconde source S2 au cours de l'isolement de la maille 30, et était déjà déconnectée de la première source S1 par la maille de sectionnement 20.

Il s'agit donc de reconfigurer le réseau 1 de manière à alimenter de nouveau le segment intermédiaire constitué ici uniquement de la barre 123.

Les étapes du procédé de reconfiguration du réseau sont les suivantes.

A la figure 9, le relais 24 mesure un niveau de tension bas sur la barre 123 (VL=0) et reçoit du relais 23 une mesure haute du niveau de tension sur la barre 112 (VD=1). De plus, le relais 24 détecte que disjoncteur local 22 est en position ouverte (PL=0). Enfin, la valeur courante de la variable de détection de défaillance DD tenue à jour par le relais 24 est « 0 ».

Conformément à la logique de programmation de la figure 6, le relais 24 modifie la valeur de la position requise PRL du disjoncteur local 22 de la valeur « 0 » à la valeur « 1 ».

La valeur de la position courante du disjoncteur locale 22 étant différente de la position requise, un signal d'actionnement est généré de nature à basculer en ouverture le disjoncteur local 22.

Le disjoncteur 22 ayant été dans la position ouverte depuis un certain temps, la temporisation interdisant la fermeture de ce disjoncteur est terminée. Le signal d'actionnement en fermeture est par conséquent émis immédiatement. Le disjoncteur 22 est fermé. Ceci est représenté sur la figure 10.

Parallèlement, le relais 24 transmet un message au relais 23 qui permet à ce dernier de mettre à jour la valeur du niveau de tension sur la barre distante : VD=0.

Le relais 23 mesure un niveau de tension haut sur la barre locale 112 (VL=1) et la position ouverte du disjoncteur local 21 (PL=0). La valeur courante de la variable de détection de défaillance DD tenue à jour par le relais 23 est « 0 ».

Conformément à la logique de programmation de la figure 6, le relais 23 modifie la valeur du de la position requise PRL du disjoncteur local 21 de la valeur « 0 » à la valeur « 1 ».

La valeur de la position courante du disjoncteur étant différente de la position requise, un signal d'actionnement est généré de nature à basculer en ouverture le disjoncteur local 21.

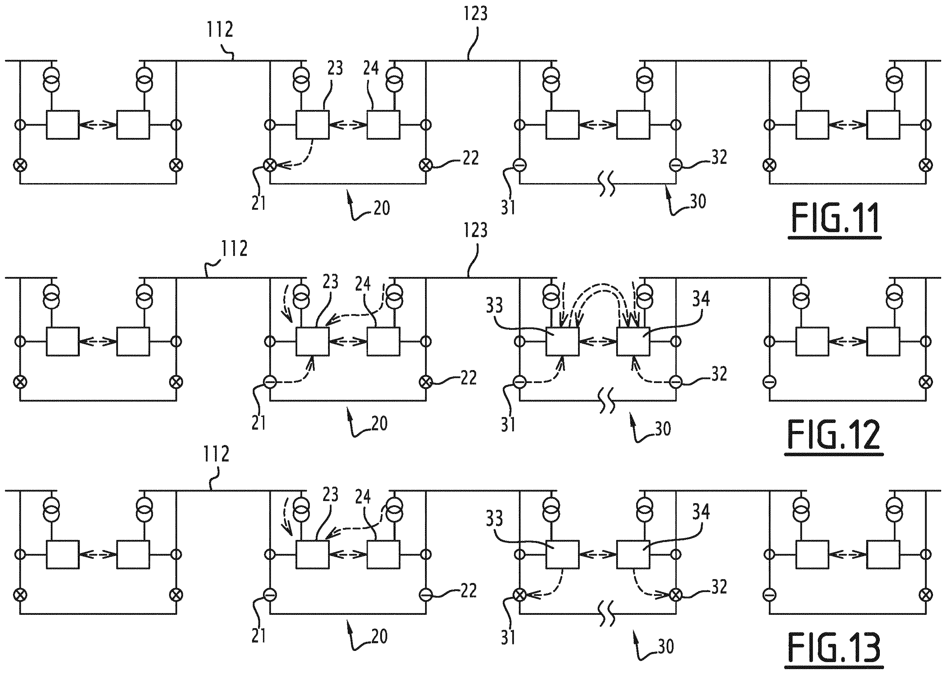

Le disjoncteur 21 ayant été dans la position ouverte depuis un certain temps, la temporisation interdisant sa fermeture est terminée. Le signal d'actionnement en fermeture est par conséquent émis immédiatement. Le disjoncteur 21 est fermé. Ceci est représenté sur la figure 11.

Ainsi, la barre 123 est maintenant connectée à la première source S1 à travers la maille 20 qui ne constitue plus la maille de sectionnement du réseau 1. La barre 123 est par conséquent portée au potentiel de la première source S1. Les équipements électriques qui y sont connectés sont à nouveau alimentés.

La maille 30 défectueuse est isolée. Elle constitue une maille de sectionnement du réseau 1.

Il s'agit donc d'un mode de fonctionnement dégradé, puisque la segmentation du réseau n'est pas la segmentation optimale de la figure 9. Il s'agit en revanche d'un mode de fonctionnement transparent, dans la mesure où les équipements connectés au réseau 1 sont alimentés convenablement.

Une équipe de maintenance est alors déployée sur le terrain pour corriger la défaillance de la maille 30, par exemple en remplaçant le câble constitutif de cette maille.

Les disjoncteurs 31 et 32 étant bloqués en ouverture, la sécurité des personnes travaillant sur la maille 30 est assurée en complément par une mise à la terre de la maille par les organes prévus à cet effet.

A la figure 12, à l'issue de la remise en état de la maille 30, les relais 33 et 34 sont réinitialisés. La valeur de la variable de détection de défaillance DD est alors remise à la valeur « 0 ».

Par ailleurs, le disjoncteur 21 est ouvert manuellement dans le but de retourner à la configuration optimale.

En conséquence, la barre 123 est privée de tension.

Le niveau de tension sur la barre 123 mesurée par le relais 24 est bas : VL=0. Cette information est transmise au relais 23 qui met à jour la variable de niveau de tension sur la barre distante : VD=0. Le relais 23 constate alors que le disjoncteur local 21 est ouvert et que les niveaux de tension sur la barre locale 112 (VL=1) et sur la barre distante (VD=0) sont opposées, alors qu'aucune défaillance (DD=0) n'est détectée sur la maille 20. Cela conduit à la modification de la position requise PRL pour le disjoncteur local 21 de la valeur « 0 » ouvert, à la valeur « 1 » fermée. Cependant, le signal d'actionnement en fermeture n'est pas émis par le relais 23, car la temporisation, déclenchée lors de l'ouverture du disjoncteur 21, n'est pas encore écoulée.

Or, durant cette temporisation, le relais 33, respectivement 34, constate que le disjoncteur local 31, respectivement 32, est ouvert (PL=0) et que les niveaux de tension sur les barres auxquelles la maille 30 est connectée sont opposées (VL=0 et VD=1 pour le relais 33, VD=0 et VL=1 pour le relais 34). Puisque la variable de détection de défaillance DD pour la maille 30 a été réinitialisée à la valeur « 0 », cela conduit à la modification de la position requise PRL des disjoncteurs locaux 31 et 32, de la valeur « 0 » à la valeur « 1 ».

Un signal d'actionnement en fermeture est émis immédiatement (figure 13), car la temporisation qui suit l'ouverture du disjoncteur considéré est dépassée depuis longtemps. En conséquence, le disjoncteur 31, respectivement 32, est fermé. De la sorte, la maille 30 et la barre 123 sont maintenant connectées à la seconde source S2.

Le relais 23 constate alors que les conditions de la fermeture du disjoncteur local 21 ne sont plus réunies. En effet, le disjoncteur local est certes ouvert (PL=0), mais les deux barres locale et distante sont alimentées (VL=1 et VD=1). Cela conduit à replacer la variable de position requise PRL du disjoncteur local 21 à la valeur « 0 ». la position requise PRL étant maintenant égale à la positon courante PL du disjoncteur local 23, aucun signal d'actionnement n'est alors à émettre. Le disjoncteur local 21 n'est donc pas refermé. Il reste dans l'état ouvert.

Finalement, le disjoncteur 22 est manuellement ouvert. Le réseau 1 est ainsi replacé dans sa configuration optimale.

L'homme du métier saura comment adapter le présent enseignement à des réseaux présentant une autre topologie qu'une topologie en ligne, en particulier pour des réseaux ayant une topologie en étoile, un nœud étant connecté à plus de deux lignes.

Les parties du réseau, maille et/ou nœud, qui ne sont pas alimentées par une source et par conséquent dans un niveau de potentiel haut, ne sont pas forcément à un potentiel de référence (terre par exemple). Leur niveau de tension est flottant en attendant leur éventuelle remise sous tension. Dans la présente demande, le terme de niveau de tension « bas » a été utilisé pour désigner cette tension flottante et le terme d' « opposé » pour une différence appréciable entre les niveaux de tension de deux barres.

## Revendications

1. Procédé de reconfiguration d'un réseau (1) d'alimentation électrique, ledit réseau comportant :
- une ligne électrique, connectée entre des première et seconde sources (S1, S2) propres à appliquer à la ligne un niveau de tension haut, la ligne comportant une pluralité de mailles (10, 20, 30, 40) connectées les unes à la suite des autres par une pluralité de barres (101, 112, 123, 134, 102) formant des nœuds du réseau, chacune des deux extrémités d'une maille étant connectée électriquement à une barre par l'intermédiaire d'un disjoncteur (11, 12 ; 21, 22 ; 31, 32 ; 41, 42) propre à être dans une position ouverte ou dans une position fermée, une barre qui n'est pas dans un niveau de tension haut étant dans un niveau de tension flottant, dit niveau de tension « bas » ;
- un système de détection de défaillance, comportant, associée à chaque maille, une paire de relais (13, 14 ; 23, 24 ; 33, 34 ; 43, 44) en communication l'un avec l'autre, un relais étant propre à piloter un disjoncteur local situé à une extrémité de la maille considérée lorsqu'une défaillance est détectée à partir du résultat d'une mesure différentielle des courants circulant au niveau des extrémités de la maille considérée,
**caractérisé en ce que** ledit procédé de reconfiguration est mis en œuvre par les relais du système de détection de défaillance, et ce qu'il consiste à acquérir une valeur du niveau de tension sur une barre locale à laquelle est connecté le disjoncteur piloté par le relais considéré; à acquérir une valeur du niveau de tension sur une barre distante à laquelle est connecté le disjoncteur piloté par l'autre relais de la paire de relais à laquelle appartient le relais considéré ; et à commander en fermeture le disjoncteur local lorsque : lesdites valeurs des niveaux de tension sur la barre locale et sur la barre distante sont opposées, c'est-à-dire qu'il existe une différence appréciable entre les niveaux de tension desdites deux barres ; le disjoncteur local est dans la position ouverte (PL) ; et aucune défaillance n'a été détectée sur la maille considérée (DD),
et **en ce que** le réseau ne comporte pas de système dédié à la reconfiguration du réseau.

2. Procédé selon la revendication 1, dans lequel, après ouverture d'un disjoncteur, celui-ci ne peut pas être refermé avant l'expiration d'une temporisation prédéfinie.

3. Procédé selon la revendication 2, dans lequel, à l'issue d'une étape de correction de la défaillance d'une maille ayant conduit à une reconfiguration du réseau, et à l'issue d'une étape de réinitialisation des relais de ladite maille, le procédé consiste, pour replacer le réseau (1) dans une configuration optimale, à replacer la variable de détection de défaillance (DD) à une valeur par défaut, et à l'ouvrir manuellement au moins un disjoncteur d'une maille choisie comme maille de sectionnement du réseau dans la configuration optimale.

4. Réseau (1) d'alimentation électrique comportant :
- une ligne électrique connectée entre des première et seconde sources (S1, S2) propres à appliquer à la ligne un niveau de tension haut, la ligne comportant une pluralité de mailles (10, 20, 30, 40) connectées les unes à la suite des autres par une pluralité de barres (101, 112, 123, 134, 102) formant des nœuds du réseau, chacune des deux extrémités d'une maille étant connectée électriquement à une barre par l'intermédiaire d'un disjoncteur (11, 12 ; 21, 22 ; 31, 32 ; 41, 42) propre à être dans une position ouverte ou une position fermée, une barre qui n'est pas dans un niveau de tension haut étant dans un niveau de tension flottant, dit niveau de tension « bas » ;
- un système de détection de défaillance, comportant, associée à chaque maille, une paire de relais (13, 14 ; 23, 24 ; 33, 34 ; 43, 44) en communication l'un avec l'autre, un relais étant propre à piloter un disjoncteur local situé à une extrémité de la maille considérée lorsqu'une défaillance est détectée à partir du résultat d'une mesure différentielle des courants circulant au niveau des extrémités de la maille considérée,
**caractérisé en ce que** le réseau est adapté à être reconfiguré, et que cette reconfiguration du réseau est mise en œuvre **en ce que** chaque relais est propre à acquérir une valeur du niveau de tension sur une barre locale à laquelle est connecté le disjoncteur piloté par le relais considéré, à acquérir une valeur du niveau de tension sur une barre distante à laquelle est connecté le disjoncteur piloté par l'autre relais de la paire de relais à laquelle appartient le relais considéré, et **en ce que** chaque relais est programmé pour requérir la fermeture du disjoncteur local lorsque : les valeurs mesurées des niveaux de tension de la barre locale et de la barre distante sont opposées, c'est-à-dire qu'il existe une différence appréciable entre les niveaux de tension desdites deux barres ; le disjoncteur local est dans la position ouverte ; et aucune défaillance n'a été détectée sur la maille considérée, et
**en ce que** le réseau ne comporte pas de système dédié à la reconfiguration du réseau.

5. Réseau selon la revendication 4, dans lequel un disjoncteur une fois en position « ouvert » ne peut être basculé dans la position « fermé » qu'à l'issue d'une temporisation.

6. Réseau selon l'une quelconque des revendications 4 à 5, dans lequel un relais tient à jour une variable de position du disjoncteur local (PL), une variable de niveau de tension sur la barre locale (VL), une variable de niveau de tension sur la barre distante (VD), une variable de détection de défaillance (DD) et une variable de position requise du disjoncteur local (PRL).

## Patentansprüche

1. Verfahren zum Umkonfigurieren eines Stromversorgungsnetzwerks (1), wobei das Netzwerk aufweist:
- eine elektrische Leitung, die zwischen einer ersten Quelle und einer zweiten Quelle (S1, S2), die zum Anlegen eines Hochspannungspegels an die Leitung geeignet sind, angeschlossen ist, wobei die Leitung mehrere miteinander verbundene Maschen (10, 20, 30, 40) aufweist, von denen die einen nachfolgend auf die anderen durch mehrere Schienen (101, 112, 123, 134, 102), die Knoten des Netzwerks bilden, verbunden sind, wobei jedes der beiden Enden einer Masche elektrisch mittels eines Schutzschalters (11, 12; 21, 22; 31, 32; 41, 42), der geeignet ist, sich in einer offenen Position oder in einer geschlossenen Position zu befinden, mit einer Schiene verbunden ist, wobei sich eine Schiene, die sich nicht auf einem hohen Spannungsniveau befindet, auf einem schwebenden Spannungsniveau, "niedriges" Spannungsniveau genannt, befindet;
- ein Fehlerdetektionssystem, aufweisend, zugeordnet zu jeder Masche, ein Paar von Relais (13, 14; 23, 24; 33, 34; 43, 44), die miteinander in Verbindung stehen, wobei ein Relais geeignet ist, einen lokalen Schutzschalter, der sich an einem Ende der betrachteten Masche befindet, zu steuern, wenn ein Fehler auf der Grundlage des Ergebnisses einer Differenzmessung der an den Enden der betrachteten Masche fließenden Ströme detektiert wird;
**dadurch gekennzeichnet, dass** das Verfahren zum Umkonfigurieren von den Relais des Fehlerdetektionssystems implementiert wird und dadurch, dass es darin besteht, einen Wert des Spannungsniveaus an einer lokalen Schiene zu erfassen, an die der von dem betrachteten Relais gesteuerte Schutzschalter angeschlossen ist, einen Wert des Spannungsniveaus an einer entfernten Schiene zu erfassen, an die der Schutzschalter angeschlossen ist, der von dem anderen Relais des Relaispaares gesteuert wird, zu dem das betrachtete Relais gehört; und darin, den lokalen Schutzschalter zu schließen, wenn: die Werte der Spannungsniveaus auf der lokalen Schiene und auf der entfernten Schiene entgegengesetzt sind, das heißt ein erkennbarer Unterschied zwischen den Spannungsniveaus der zwei Schienen existiert; der lokale Schutzschalter sich in der offenen Position (PL) befindet; und kein Fehler auf der betrachteten Masche detektiert wurde (DD), und dadurch, dass das Netzwerk kein System aufweist, dass für das Umkonfigurieren des Netzwerks dediziert ist.

2. Verfahren nach Anspruch 1, wobei nach dem Öffnen eines Schutzschalters dieser nicht vor Ablauf einer vordefinierten Zeitverzögerung geschlossen werden kann.

3. Verfahren nach Anspruch 2, bei dem am Ende eines Schritts zum Korrigieren des Fehlers einer Masche, das zu einer Neukonfiguration des Netzwerks geführt hat, und am Ende eines Schritts zum Reinitialisieren der Relais der Masche das Verfahren darin besteht, um das Netzwerk (1) in einer optimalen Konfiguration zu ersetzen, die Fehlerdetektionsvariable (DD) durch einen Standardwert zu ersetzen und mindestens einen Schutzschalter einer als Trennungsmasche des Netzwerks in der optimalen Konfiguration ausgewählten Masche manuell zu öffnen.

4. Elektrisches Versorgungsnetz (1) aufweisend:
- eine elektrische Leitung, die zwischen einer ersten Quelle und einer zweiten Quelle (S1, S2), die zum Anlegen eines Hochspannungspegels an die Leitung geeignet sind, angeschlossen ist, wobei die Leitung mehrere miteinander verbundene Maschen (10, 20, 30, 40) aufweist, von denen die einen nachfolgend auf die anderen durch mehrere Schienen (101, 112, 123, 134, 102), die Knoten des Netzwerks bilden, verbunden sind, wobei jedes der beiden Enden einer Masche elektrisch mittels eines Schutzschalters (11, 12; 21, 22; 31, 32; 41, 42), der geeignet ist, sich in einer offenen Position oder in einer geschlossenen Position zu befinden, mit einer Schiene verbunden ist, wobei sich eine Schiene, die sich nicht auf einem hohen Spannungsniveau befindet, auf einem schwebenden Spannungsniveau, "niedriges" Spannungsniveau genannt, befindet;
- ein Fehlerdetektionssystem, aufweisend, zugeordnet zu jeder Masche, ein Paar von Relais (13, 14; 23, 24; 33, 34; 43, 44), die miteinander in Verbindung stehen, wobei ein Relais geeignet ist, einen lokalen Schutzschalter, der sich an einem Ende der betrachteten Masche befindet, zu steuern, wenn ein Fehler auf der Grundlage des Ergebnisses einer Differenzmessung der an den Enden der betrachteten Masche fließenden Ströme detektiert wird;
**dadurch gekennzeichnet, dass** das Netzwerk eingerichtet ist, umkonfiguriert zu werden und dass dieses Umkonfigurieren des Netzwerks dadurch implementiert wird, dass jedes Relais geeignet ist, einen Wert des Spannungsniveaus an einer lokalen Schiene zu erfassen, an die der von dem betrachteten Relais gesteuerte Schutzschalter angeschlossen ist, einen Wert des Spannungsniveaus an einer entfernten Schiene zu erfassen, an die der Schutzschalter angeschlossen ist, der von dem anderen Relais des Relaispaares gesteuert wird, zu dem das betrachtete Relais gehört; und dadurch, dass jedes Relais programmiert ist, das Schließen des lokalen Schutzschalters zu fordern, wenn: die gemessenen Werte der Spannungsniveaus der lokalen Schiene und der entfernten Schiene entgegengesetzt sind, das heißt ein erkennbarer Unterschied zwischen den Spannungsniveaus der zwei Schienen existiert; der lokale Schutzschalter sich in der offenen Position befindet; und kein Fehler auf der betrachteten Masche detektiert wurde,
und dadurch, dass das Netzwerk kein System aufweist, dass für das Umkonfigurieren des Netzwerks dediziert ist.

5. Netzwerk nach Anspruch 4, in dem ein Schutzschalter, der sich einmal in der Position "offen" befindet, erst nach einer Zeitverzögerung in die Position "geschlossen" geschaltet werden kann.

6. Netzwerk nach einem der Ansprüche 4 bis 6, in dem ein Relais eine Variable der Position des lokalen Schutzschalters (PL), eine Variable des Spannungsniveaus auf der lokalen Schiene (VL), eine Variable des Spannungsniveaus auf der entfernten Schiene (VD) eine Variable der Fehlerdetektion (DD) und eine Variable der erforderlichen Position des lokalen Schutzschalters (PRL) auf dem neuesten Stand hält.

## Claims

1. A method for reconfiguring an electric power network (1), said network including:
- an electric line, connected between first and second sources (S1, S2) able to apply a high voltage level to the line, the line including a plurality of meshes (10, 20, 30, 40) connected one after the other by a plurality of bars (101, 112, 123, 134, 102) forming nodes of the network, each of both ends of a mesh being electrically connected to a bar via a circuit breaker (11, 12; 21, 22; 31, 32; 41, 42) capable of being in an open position or a closed position, a bar that is not at a high voltage level being at a low voltage level;
- a failure detection system, including, associated with each mesh, a pair of relays (13, 14; 23, 24; 33, 34; 43, 44) in communication with one another, a relay being able to control a local circuit breaker located at one end of the mesh in question when a failure is detected from the result of the differential measurement of the currents circulating at the ends of the mesh in question,
**characterized in that** said method for reconfiguring is carried out by the relay of the failure detection system, and **in that** it consists of acquiring a value of the voltage level on a local bar to which is connected the circuit breaker controlled by the relay in question; acquire a value of the voltage level on a remote bar to which is connected the circuit breaker that is controlled by the other relay of the pair of relays to which the relay in question belongs; and commanding the closing of the local circuit breaker when the measured values of the voltage levels of the local bar and the remote bar are opposite, the local circuit breaker is in the open position (PL), and no failure has been detected on the mesh in question (DD), and **in that** the electric power network does not include a system dedicated to reconfiguring the network.

2. The method according to claim 1, wherein, after opening of a circuit breaker, the latter cannot be closed before the expiration of a predefined time delay.

3. The method according to claim 2, wherein, at the end of a step for correcting the failure of a mesh having led to a reconfiguration of the network, and at the end of a step for resetting the relays of said mesh, the method consists, to place the network (1) back in an optimal configuration, of placing the failure detection variable (DD) back at a default value, and manually opening at least one circuit breaker of a mesh chosen as isolating mesh of the network in the optimal configuration.

4. An electric power network (1) including:
- an electric line, connected between first and second sources (S1, S2) able to apply a high voltage level to the line, the line including a plurality of meshes (10, 20, 30, 40) connected one after the other by a plurality of bars (101, 112, 123, 134, 102) forming nodes of the network, each of both ends of a mesh being electrically connected to a bar via a circuit breaker (11, 12; 21, 22; 31, 32; 41, 42) capable of being in an open position or a closed position, a bar that is not at a high voltage level being at a low voltage level;
- a failure detection system, including, associated with each mesh, a pair of relays (13, 14; 23, 24; 33, 34; 43, 44) in communication with one another, a relay being able to control a local circuit breaker located at one end of the mesh in question when a failure is detected from the result of the differential measurement of the currents circulating at the ends of the mesh in question,
**characterized in that** the electric power network is capable of being reconfigured, and that this reconfiguration of the network is realized **in that** each relay is able to acquire a value of the voltage level on a local bar to which is connected the circuit breaker controlled by the relay in question; acquire a value of the voltage level on a remote bar to which is connected the circuit breaker that is controlled by the other relay of the pair of relays to which the relay in question belongs, and **in that** each relay is programmed to request the closing of the local circuit breaker when the measured values of the voltage levels of the local bar and the remote bar are opposite, the local circuit breaker is in the open position, and no failure has been detected on the mesh in question, and the electric power network does not include a system dedicated to reconfiguring the network.

5. The network according to claim 4, wherein once a circuit breaker is in the "open" position, it cannot be switched to the "closed" position until the end of a time delay.

6. The network according to any one of claims 4 to 5, wherein a relay keeps up-to-date a local circuit breaker position variable (PL), a local bar voltage level variable (VL), a remote bar voltage level variable (VD), a failure detection variable (DD) and a local circuit breaker required position variable (PRL).
